# EUROPEAN PATENT APPLICATION

(11) **EP 3 741 637 A1**
(43) Date of publication of application: **25.11.2020**
(21) Application number: 19756603.7
(22) Date of filing: 22.02.2019
(51) Int. Cl.: B60W 30/045, B60T 8/1755, B60W 10/04, B60W 10/06, B60W 10/18, B60W 10/188

(54) **METHOD FOR CONTROLLING VEHICLE AND VEHICLE SYSTEM**

(30) Priority: 23.02.2018 JP 2018030338
(71) Applicant: MAZDA MOTOR CORPORATION, Hiroshima 730-8670 (JP)
(72) Inventor: SUNAHARA, Osamu, Aki-gun, Hiroshima 730-8670 (JP); UMETSU, Daisuke, Aki-gun, Hiroshima 730-8670 (JP)
(74) Representative: Müller-Boré & Partner Patentanwälte PartG mbB
(86) International application number: PCT/JP2019/006801
(87) International publication number: WO 2019/163947

(57) **Abstract**

A vehicle control method for a vehicle (1) comprises the steps: when an output torque of an engine (4) is equal to or greater than a given value, reducing the output torque in accordance with an increase in steering angle of the vehicle; setting, in accordance with a decrease in the steering angle, a first yaw moment instruction value whose direction is reverse to that of a yaw rate being generated in the vehicle; when the output torque is less than the given value, applying a braking force to road wheels, based on the first yaw moment instruction value; and, when the output torque is equal to or greater than the given value, applying a braking force to the road wheels, based on a second yaw moment instruction value smaller than the first yaw moment instruction value.

## Description

### TECHNICAL FIELD

The present invention relates to a vehicle control method and a vehicle system, and more particularly to: a vehicle control method and a vehicle system for controlling a vehicle which comprises road wheels, an engine to generate a torque for driving the road wheels, and a braking device to apply a braking force to the road wheels.

### BACKGROUND ART

Heretofore, there has been known a technique of, in a situation where the behavior of a vehicle becomes unstable due to road wheel slip or the like, controlling the vehicle behavior to enable a safe traveling (e.g., antiskid brake system). Specifically, there has been known a technique of detecting the occurrence of vehicle understeer or oversteer behavior during vehicle cornering or the like, and applying an appropriate deceleration to one or more road wheels so as to suppress such a behavior.

As a different type of control from the above control for improving safety in a traveling condition causing the vehicle behavior to become unstable, there has been known a vehicle motion control device configured to automatically perform acceleration or deceleration of a vehicle in association with manipulation of a steering wheel which is started from a usual driving region, and reduce skid in a marginal driving region, (see, e.g., the following Patent Document 1). In this Patent Document 1, there is disclosed a vehicle motion control device having a first mode for controlling acceleration and deceleration in a forward-rearward (longitudinal) direction of the vehicle, and a second mode for controlling the yaw moment of the vehicle.

Further, there has been proposed a vehicle behavior control device configured to reduce a vehicle driving force according to a yaw rate-related quantity (e.g., yaw acceleration) corresponding to manipulation of a steering wheel (steering manipulation) by a driver, thereby making it possible to quickly generate a deceleration in a vehicle in response to start of the steering manipulation by the driver and thus quickly apply a sufficient load to front road wheels as steerable road wheels (see, e.g., the following Patent Document 2).

### CITATION LIST

### [Patent Document]

Patent Document 1: JP 5143103B
Patent Document 2: JP 2014-166014A

### SUMMARY OF INVENTION

### [Technical Problem]

The control to be executed in the first mode (this control will hereinafter be referred to appropriately as "first control") as described in the Patent Document 1 is typically configured to apply a deceleration to the vehicle when steering angle is increasing (i.e., when turning manipulation of the steering wheel is being performed), thereby improving turning performance (cornering performance) during the turning manipulation. On the other hand, the control to be executed in the second mode (this control will hereinafter be referred to appropriately as "second control") as described in the Patent Document 1 is typically configured to applied, to the vehicle, a yaw moment whose direction is reverse to that of a yaw rate being generated in the vehicle when the steering angle is decreasing (i.e., when turning-back manipulation of the steering wheel is being performed), thereby improving steering stability during the turning-back manipulation.

Here, for example, when a vehicle travels along an S-shaped curve, there is the following tendency: first of all, the first control is executed during an increase in steering angle (during the turning manipulation), and then the second control is executed during a decrease in steering angle (during the turning-back manipulation), whereafter the first control is further executed during an increase in steering angle (during the turning manipulation). In this situation, when the steering manipulation is switched from the turning-back manipulation to the turning manipulation, i.e., when the steering angle changes across a neutral point (steering angle: 0) corresponding a neutral position of steering wheel, it is desirable that the control mode is adequately switched from the second control to the first mode. However, there is a possibility that both of the first and second controls are executed when the steering angle is around the neutral point. That is, if the second control is continued to be executed even after the steering angle has changed across the neutral point, the first control will be overlappingly executed in the state in which the second control is executed.

If both of the first and second controls are executed as mentioned above, control intervention becomes excessive as a whole in the vehicle, which is likely to give a driver a feeling of strangeness. For example, in an S-shaped curve, when the steering wheel is turned back in a clockwise direction from a counterclockwisely manipulated state, the second control is executed to apply a yaw moment to the vehicle so as to cause the vehicle to be turned in a straight-ahead direction, i.e., make it easy for the vehicle to be turned in the clockwise direction. Subsequently, when the steering wheel is turned in the clockwise direction across the neutral position, the first control is executed to apply a deceleration to the vehicle so as to make it easy for the vehicle to be turned in the clockwise direction. In such a series of situations, if the first control is overlappingly executed in the course of execution of the second control, control for turning the vehicle in the clockwise direction will be doubly applied, so that the vehicle is likely to become an oversteered state in a clockwise curve.

With a view to suppressing the above situation where the second control and the first control are overlappingly executed and thereby control intervention becomes excessive as a whole in the vehicle, it is conceivable to terminate the second control before the steering angle reaches the neutral point during the turning-back manipulation. However, in this case, the yaw moment to be applied to the vehicle needs to be reduced from the time when the steering is greater than 0, and thereby the effect of improving steering stability during the turning-back manipulation by the second control is likely to become insufficient. Thus, there remains a need for improvement.

The present invention has been made to solve the above conventional problem, and an object thereof is to, in vehicle attitude control of executing, based on manipulation of a steering wheel (steering manipulation), control of applying a deceleration to a vehicle and control of applying a yaw moment to the vehicle, satisfy both of suppression of a situation where control intervention becomes excessive as a whole in the vehicle, and improvement in steering stability during turning-back manipulation.

### [Solution to Technical Problem]

In order to achieve the above object, according to the present invention, there is provided a vehicle control method for a vehicle equipped with road wheels, an engine to generate a torque for driving the road wheels, and a braking device to apply a braking force to the road wheels, the vehicle control method comprising the steps of: reducing an output torque of the engine in accordance with an increase in steering angle of the vehicle, when the output torque of the engine is equal to or greater than a given value; setting, in accordance with a decrease in the steering angle of the vehicle, a first yaw moment instruction value whose direction is reverse to that of a yaw rate being generated in the vehicle; applying a braking force to the road wheels based on the first yaw moment instruction value, when the output torque of the engine is less than the given value; and applying a braking force to the road wheels based on a second yaw moment instruction value smaller than the first yaw moment instruction value.

In the vehicle control method according to the above present invention, under the condition that the output torque of the engine is equal to or greater than the given value, during turning-back manipulation of a steering wheel, a yaw moment is applied to the vehicle based on the second yaw moment instruction value whose magnitude is less than that of the first yaw moment instruction value, and, during turning manipulation of the steering wheel, the output torque of the engine is reduced. Thus, in a situation where the steering manipulation is switched from the turning-back manipulation to the turning manipulation, and the control of reducing the output torque of the engine (first control) is executed, the control of applying a yaw moment to the vehicle (second control) is suppressed, as compared to a situation where the first control is not executed, so that it is possible to suppress a situation where the first control and the second control are overlappingly executed and thereby control intervention becomes excessive as a whole in the vehicle.

On the other hand, under the condition that the output torque of the engine is less than the given value, during the turning-back manipulation, a yaw moment is applied to the vehicle based on the first yaw moment instruction value, and, during the turning manipulation, the control of reducing the output torque of the engine (first control) is not executed. Thus, in a situation where the first control of reducing the output torque of the engine is not executed after the steering manipulation is switched from the turning-back manipulation to the turning manipulation, the second control of applying a yaw moment to the vehicle is not suppressed, as compared to a situation where the first control is executed, so that it is possible to much more improve steering stability during the turning-back manipulation. Further, the second control is not suppressed until the steering manipulation is switched to the turning manipulation, so that the application of a yaw moment to the vehicle is at least temporarily continued after the steering angle changes across the neutral point, thereby making it is possible to ensure improvement in turning performance of the vehicle even in the situation where the first control of reducing the output torque of the engine is not executed.

As above, according to the above feature, in vehicle attitude control of executing, based on the steering manipulation, control of applying a deceleration to the vehicle and control of applying a yaw moment to the vehicle, it is possible to satisfy both of suppression of the situation where control intervention becomes excessive as a whole in the vehicle, and improvement in steering stability during the turning-back manipulation.

Preferably, in the vehicle control method according to the present invention, the step of applying the braking force to the road wheels based on the second yaw moment instruction value comprises gradually reducing the braking force along with a decrease in the steering angle of the vehicle.

According to this feature, in a situation where the output torque of the engine is equal to or greater than the given value, and the first control of reducing the output torque of the engine is executed, a yaw moment to be applied to the vehicle is gradually reduced along with a decrease in the steering angle, so that it is possible to suppress a situation where the application of a yaw moment to the vehicle suddenly disappears to cause a large change in vehicle behavior, thereby giving a driver a feeling of strangeness.

More preferably, in the vehicle control method according to the present invention, the step of applying the braking force to the road wheels based on the second yaw moment instruction value comprises setting the braking force to approximately 0, when the steering angle of the vehicle is at a neutral point thereof.

According to this feature, in the situation where the output torque of the engine is equal to or greater than the given value, and the first control of reducing the output torque of the engine is executed, the braking force to be applied to the road wheels is set to approximately 0, when the steering angle of the vehicle is at a neutral point thereof, so that it is possible to adequately terminate the application of a yaw moment to the vehicle when the steering manipulation is switched from the turning-back manipulation to the turning manipulation, i.e., when the steering angle changes across the neutral point. This makes it possible to prevent a situation where the first control and the second control are overlappingly executed and thereby control intervention becomes excessive as a whole in the vehicle.

Preferably, in the vehicle control method according to the present invention, the step of applying the braking force to the road wheels based on the first yaw moment instruction value comprises continuing an application of the braking force to the road wheels, when the steering angle of the vehicle changes beyond a neutral point thereof.

According to this feature, in a situation where the output torque of the engine is less than the given value, and the first control of reducing the output torque of the engine is not executed, the application of a yaw moment to the vehicle is continued even after the steering angle changes beyond the neutral point, so that it is possible to ensure improvement in turning performance of the vehicle even in the situation where the first control of reducing the output torque of the engine is not executed.

Preferably, the vehicle control method according to the present invention further comprises the steps of: setting, in accordance with an increase in the steering angle, a third yaw moment instruction value whose direction is the same as that of a yaw rate of the vehicle increasing according to the increase in the steering angle; and applying a braking force to the road wheels based on the third yaw moment instruction value, when the output torque of the engine is less than the given value.

According to this feature, in the situation where the output torque of the engine is less than the given value, and the first control of reducing the output torque of the engine is not executed, a yaw moment whose direction is the same as that of a yaw rate of the vehicle increasing according to the increase in the steering angle is applied during the turning manipulation after the steering angle changes across the neutral point, so that it is possible to ensure improvement in turning performance of the vehicle even in the situation where the first control of reducing the output torque of the engine is not executed.

In order to achieve the above object, according to still another aspect of the present invention, there is provided a vehicle control method for a vehicle equipped with road wheels, an engine to generate a torque for driving the road wheels, and a braking device to apply a braking force to the road wheels, the vehicle control method comprising the steps of: reducing an output torque of the engine in accordance with an increase in steering angle of the vehicle, when the output torque of the engine is equal to or greater than a given value; setting, in accordance with a decrease in the steering angle of the vehicle, a yaw moment instruction value whose direction is reverse to that of a yaw rate being generated in the vehicle; and applying a braking force to the road wheels based on the yaw moment instruction value, wherein, when the output torque of the engine is less than the given value, the step of setting the yaw moment instruction value comprises making the yaw moment instruction value larger than when the output torque of the engine is equal to or greater than the given value.

In the vehicle control method according to the above present invention, during the turning-back manipulation, the yaw moment instruction value is set such that it is increased when the output torque of the engine is less than the given value, as compared to when the output torque of the engine is equal to or greater than the given value.

Thus, in the situation where the steering manipulation is switched from the turning-back manipulation to the turning manipulation, and the control of reducing the output torque of the engine (first control) is executed, the control of applying a yaw moment to the vehicle (second control) is suppressed, as compared to a situation where the first control is not executed, so that it is possible to suppress the situation where the first control and the second control are overlappingly executed and thereby control intervention becomes excessive as a whole in the vehicle.

On the other hand, in the situation where the first control of reducing the output torque of the engine is not executed after the steering manipulation is switched from the turning-back manipulation to the turning manipulation, the second control of applying a yaw moment to the vehicle is not suppressed, as compared to the situation where the first control is executed, so that it is possible to much more improve steering stability during the turning-back manipulation. Further, the second control is not suppressed until the steering manipulation is switched to the turning manipulation, so that the application of a yaw moment to the vehicle is at least temporarily continued after the steering angle changes across the neutral point, thereby making is possible to ensure improvement in turning performance of the vehicle even in the situation where the first control of reducing the output torque of the engine is not executed.

As above, according to the above feature, in the vehicle attitude control of executing, based on the steering manipulation, the control of applying a deceleration to the vehicle and the control of applying a yaw moment to the vehicle, it is possible to satisfy both of suppression of the situation where control intervention becomes excessive as a whole in the vehicle, and improvement in steering stability during the turning-back manipulation.

In order to achieve the above object, according to still another aspect of the present invention, there is provided a vehicle system for controlling a vehicle, comprising: road wheels; an engine to generate a torque for driving the road wheels; a braking device to apply a braking force to the road wheels; a steering angle sensor to detect a steering angle of the vehicle; an operating state sensor to detect an operating state of the engine; and a control device, wherein the control device is configured to: reduce an output torque of the engine in accordance with an increase in the steering angle detected by the steering angle sensor, when it is determined that the output torque of the engine is equal to or greater than a given value based on the operating state detected by the operating state sensor; set, in accordance with a decrease in the steering angle detected by the steering angle sensor, a first yaw moment instruction value whose direction is reverse to that of a yaw rate being generated in the vehicle; apply a braking force from the braking device to the road wheels based on the first yaw moment instruction value, when it is determined that the output torque of the engine is less than the given value based on the operating state detected by the operating state sensor; and apply a braking force from the braking device to the road wheels based on a second yaw moment instruction value smaller than the first yaw moment instruction value, when it is determined that the output torque of the engine is equal to or greater than the given value based on the operating state detected by the operating state sensor.

In the vehicle system according to the above present invention, in the vehicle attitude control of executing, based on the steering manipulation, the control of applying a deceleration to the vehicle and the control of applying a yaw moment to the vehicle, it is also possible to satisfy both of suppression of the situation where control intervention becomes excessive as a whole in the vehicle, and improvement in steering stability during the turning-back manipulation.

In order to achieve the above object, according to still another aspect of the present invention, there is provided a vehicle system for controlling a vehicle, comprising: road wheels; an engine to generate a torque for driving the road wheels; a braking device to apply a braking force to the road wheels; a steering angle sensor to detect a steering angle of the vehicle; an operating state sensor to detect an operating state of the engine; and a control device, wherein the control device is configured to: reduce the output torque of the engine in accordance with an increase in the steering angle detected by the steering angle sensor, when it is determined that an output torque of the engine is equal to or greater than a given value based on the operating state detected by the operating state sensor; set, in accordance with a decrease in the steering angle detected by the steering angle sensor, a yaw moment instruction value whose direction is reverse to that of a yaw rate being generated in the vehicle; and apply a braking force from the braking device to the road wheels based on the yaw moment instruction value, wherein, when it is determined that the output torque of the engine is less than the given value, the control device is configured to make the yaw moment instruction value larger than when it is determined that the output torque of the engine is equal to or greater than the given value.

In the vehicle system according to the above present invention, in the vehicle attitude control of executing, based on the steering manipulation, the control of applying a deceleration to the vehicle and the control of applying a yaw moment to the vehicle, it is also possible to satisfy both of suppression of the situation where control intervention becomes excessive as a whole in the vehicle, and improvement in steering stability during the turning-back manipulation.

### [Effect of Invention]

In the vehicle attitude control of executing, based on the steering manipulation, the control of applying a deceleration to a vehicle and the control of applying a yaw moment to the vehicle, the vehicle control method and the vehicle system of the present invention can satisfy both of suppression of the situation where control intervention becomes excessive as a whole in the vehicle, and improvement in steering stability during the turning-back manipulation.

### BRIEF DESCRIPTION OF DRAWINGS

FIG. 1 is a block diagram showing the overall configuration of a vehicle system according to one embodiment of the present invention.
FIG. 2 is a block diagram showing an electrical configuration of the vehicle system according to this embodiment.
FIG. 3 is a flowchart of a vehicle behavior control processing routine in this embodiment.
FIG. 4 is a flowchart of a target additional deceleration setting processing subroutine in this embodiment.
FIG. 5 is a map showing a relationship between an additional deceleration and a steering speed in this embodiment.
FIG. 6 is a flowchart of a yaw moment instruction value setting processing subroutine in this embodiment.
FIG. 7 is a map defining a gain for use in correcting a yaw moment instruction value in this embodiment.
FIG. 8 illustrates time charts each showing a temporal change in a respective one of various parameters regarding vehicle behavior control, in a state in which a vehicle in this embodiment is turning.
FIG. 9 is a flowchart of a vehicle behavior control processing routine in one modification of this embodiment.
FIG. 10 is a flowchart of a yaw moment instruction value setting processing subroutine in the modified embodiment.
FIG. 11 illustrates time charts each showing a temporal change in a respective one of various parameters regarding vehicle behavior control, in a state in which a vehicle in the modified embodiment is turning.

### DESCRIPTION OF EMBODIMENTS

With reference to the accompanying drawings, a vehicle control method and a vehicle system according one embodiment of the present invention will now be described.

### < System Configuration >

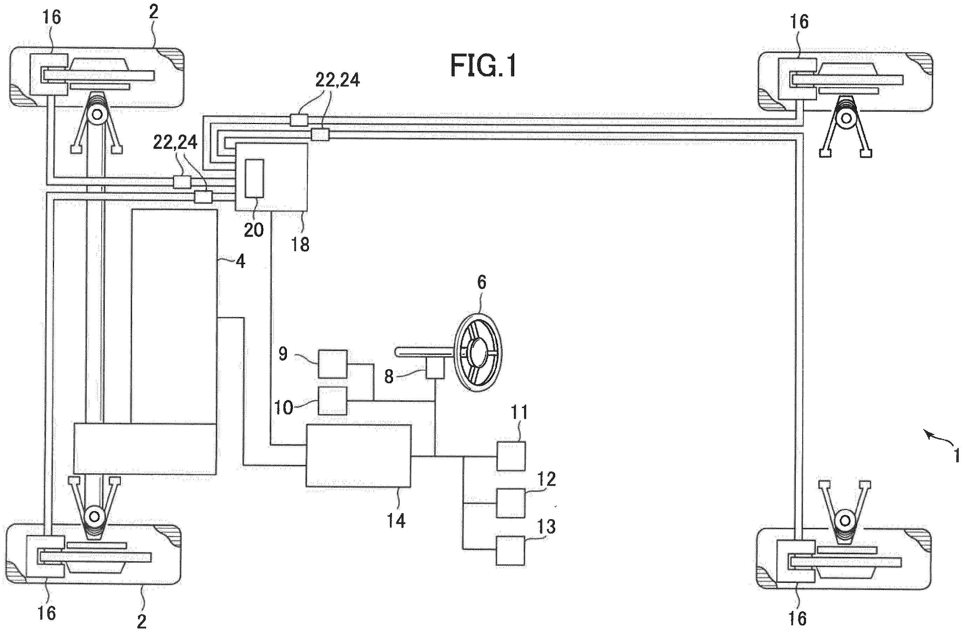

First of all, with reference to FIG. 1, the configuration of a vehicle system according to this embodiment will be described. FIG. 1 is a block diagram showing the overall configuration of the vehicle system according to this embodiment.

In FIG. 1, the reference sign 1 denotes a vehicle in the vehicle system according to this embodiment. A vehicle body of the vehicle 1 has a front portion on which an engine 4 serving as a drive source for driving drive road wheels (in the example of FIG. 1, right and left front road wheels 2) is mounted. The engine 4 is an internal combustion engine such as a gasoline engine or a diesel engine. In this embodiment, the engine 4 is a gasoline engine having a spark plug.

The vehicle 1 is equipped with: a steering device (steering wheel 6, etc.) for steering the vehicle 1; a steering angle sensor 8 installed in this steering device to detect a rotational angle (steering angle) of a steering shaft (not shown) coupled to the steering wheel 6 ; an accelerator position sensor 9 to detect a depression amount of an accelerator pedal equivalent to a relative position of the accelerator pedal (accelerator position); a brake depression amount sensor 10 to detect a depression amount of a brake pedal; a vehicle speed sensor 11 to detect a vehicle speed; a yaw rate sensor 12 to detect a yaw rate; and an acceleration sensor 13 to detect an acceleration. Each of these sensors is configured to output a detection value to a controller 14. For example, this controller 14 is comprised of a PCM (Power-train Control Module).

The vehicle 1 is further equipped with a brake control system 18 to supply a brake hydraulic pressure to a wheel cylinder or a brake caliper of each of four brake units (braking device) 16 installed in four road wheels, respectively. The brake control system 18 comprises a hydraulic pump 20 to produce a brake hydraulic pressure necessary to generate a braking force in each of the brake units 16 installed in the respective road wheels. The hydraulic pump 20 is configured to be driven by electric power supplied from, e.g., a battery, so as to generate a brake hydraulic pressure necessary to generate a braking force in each of the brake units 16, even when the brake pedal is not depressed. The brake control system 18 further comprises four valve units 22 (specifically, solenoid valves) provided, respectively, in four hydraulic pressure supply lines each connected to a respective one of the brake units 16, to control a hydraulic pressure to be supplied from the hydraulic pump 20 to the respective one of the brake units 16. The degree of opening of each of the valve units 22 can be changed, e.g., by adjusting the amount of electric power to be supplied from the battery to each of the valve units 22. The brake control system 18 further comprises four hydraulic pressure sensors 24 each to detect a hydraulic pressure supplied from the hydraulic pump 20 toward a respective one of the brake units 16. Each of the hydraulic pressure sensors 24 is disposed, e.g., at a connection area between each of the valve units 22 and a downstream portion of a corresponding one of the hydraulic pressure supply lines, to detect a hydraulic pressure at the downstream side of each of the valve units 22 and output a detection value to the controller 14.

The brake control system 18 is operable, based on a braking force instruction value input from the controller 14, and detection values from the hydraulic pressure sensors 24, to calculate a hydraulic pressure to be independently supplied to the wheel cylinder or brake caliper in each of the road wheels, and, according to the calculated hydraulic pressure, to control a pump speed of the hydraulic pump 20 and the degree of opening of each of the valve units 22.

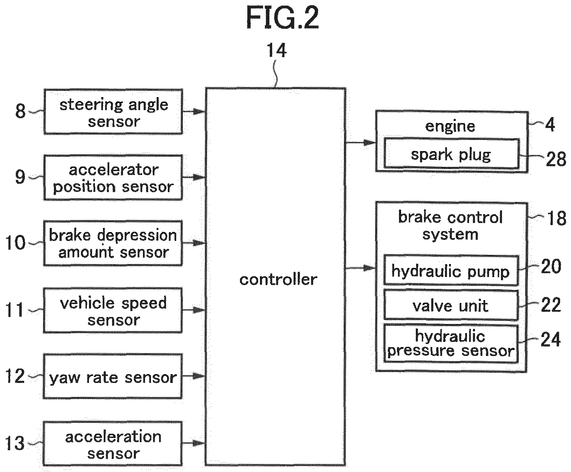

Next, with reference to FIG. 2, an electrical configuration of the vehicle system according to this embodiment will be described. FIG. 2 is a block diagram showing the electrical configuration of the vehicle system according to this embodiment.

The controller 14 according to this embodiment is operable, based on detection signals from the aforementioned sensors 8, 9, 10, 11, 12, 13 and detection signals output from various driving state sensors to detect a driving state of the vehicle 1, to output control signals so as to perform control with respect to various components of the engine 4 functioning as an output torque control mechanism (e.g., a throttle valve, a turbocharger, a variable valve mechanism, an ignition device, a fuel injection valve, and an EGR device), and control with respect to the hydraulic pump 20 and the valve units 22 of the brake control system 18.

Each of the controller 14 and the brake control system 18 is comprised of a computer which comprises: one or more processors; various programs (including a basic control program such as an OS, and an application program capable of being activated on the OS to attain a specific function) to be interpreted and executed by the one or more processors; and an internal memory such as ROM or RAM for storing therein the programs and a variety of data.

The controller 14 is equivalent to "control device" set forth in the appended claims, although the details thereof will be described later. Further, a system comprising the front road wheels 2 as steerable road wheels and drive road wheels, the engine 2, the brake units 16, the steering angle sensor 8, the accelerator position sensor 9 and the controller 14 is equivalent to "vehicle system" set forth in the appended claims.

### < Vehicle Attitude Control >

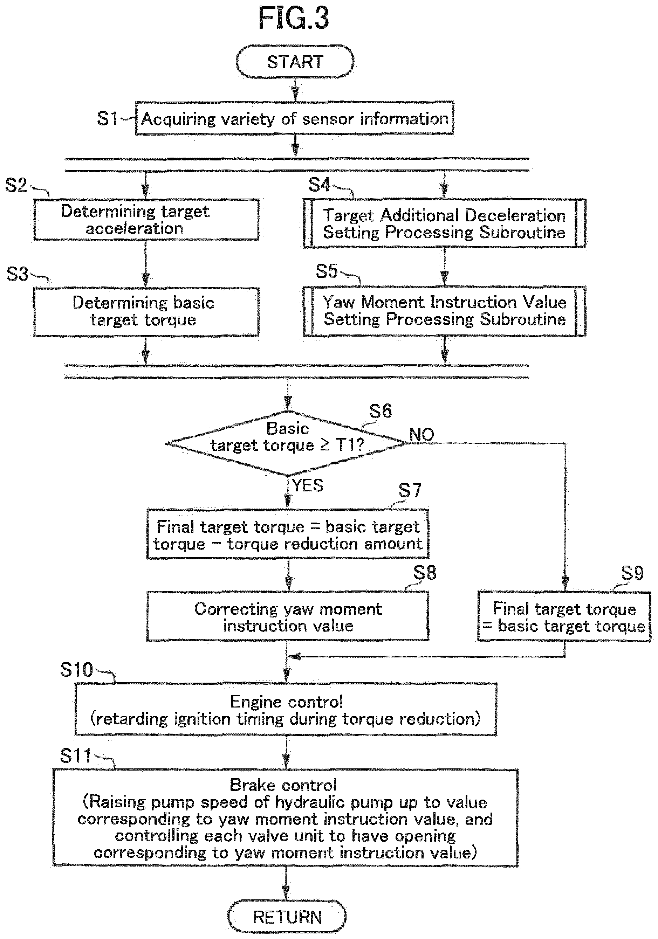

Next, the content of specific control to be executed by the vehicle system will be described. Firstly, with reference to FIG. 3, a general flow of a vehicle attitude control processing routine to be executed by the vehicle system according to this embodiment will be described. FIG. 3 is a flowchart of the vehicle attitude control processing routine in this embodiment.

The vehicle attitude control processing routine in FIG. 3 is activated when an ignition switch of the vehicle 1 is turned on to apply electric power to the vehicle system, and repeatedly executed with a given cycle period (e.g., 50 ms).

As shown in FIG. 3, upon start of the vehicle attitude control processing routine, the controller 14 operates, in step S1, to acquire a variety of information regarding the driving state of the vehicle 1. Specifically, the controller 14 operates to acquire, as information regarding the driving state, detection signals output from the aforementioned sensors, including the steering angle detected by the steering angle sensor 8, the accelerator position detected by the accelerator position sensor 9, the brake pedal depression amount detected by the brake depression amount sensor 10, the vehicle speed detected by the vehicle speed sensor 11, the yaw rate detected by the yaw rate sensor 12, the acceleration detected by the acceleration sensor 13, the hydraulic pressure detected by each of the hydraulic pressure sensors 24, and a currently-set one of plural gear stages of a transmission of the vehicle 1.

Subsequently, the controller 14 operates, in step S2, to set a target acceleration based on the driving state of the vehicle 1 acquired in the step S1. Specifically, the controller 14 operates to select, from a plurality of acceleration characteristic maps defined with respect to various vehicle speeds and various gear stages (these maps are preliminarily created and stored in a memory or the like), one acceleration characteristic map corresponding to a current value of the vehicle speed and a currently-set one of the gear stages, and refer to the selected acceleration characteristic map to determine, as a target acceleration, a value of the acceleration corresponding to a current value of the accelerator position.

Subsequently, the controller 14 operates, in step S3, to determine a basic target torque of the engine 4 necessary to attain the target acceleration determined in the step S2. In this process, the controller 14 operates to determine the basic target torque based on current values of the vehicle speed, a road grade, a road surface µ, a currently-set one of the gear stages, etc., within a torque range outputtable by the engine 4.

In parallel to the processings in the steps S2 and S3, the controller 14 operates, in step S4, to execute a target additional deceleration setting processing subroutine. The target additional deceleration setting processing subroutine is configured to set, based on a steering speed of the vehicle 1, a target additional deceleration to be added to the vehicle 1, and determine a torque reduction amount necessary to attain the target additional deceleration by means of reduction of an output torque of the engine 4 (torque to be generated by the engine 4). The details of the target additional deceleration setting processing subroutine will be described later.

Subsequently, the controller 14 operates, in the step S5, to execute a yaw moment instruction value setting processing subroutine to set a yaw moment instruction value to be applied to the vehicle 1 so as to control the vehicle attitude. The details of the yaw moment instruction value setting processing subroutine will be described later.

After completion of the processings in the steps S3 and S5, the controller 14 operates, in step S6, to determine whether or not the basic target torque determined in the step S3 is equal to or greater than a given value T1. For example, this given value T1 is approximately equal to an idle torque Ti of the engine 4.

As a result of the determination in the step S6, when the basic target torque is equal to or greater than the given value T1 (step S6: YES) (e.g., when a driver is depressing the accelerator pedal, or when there is an acceleration request from a cruise control), the subroutine proceeds to step S7 in which the controller 14 operates to determine a final target torque, based on the basic target torque determined in the step S3 and the torque reduction amount determined in the step S4. Specifically, the controller 14 operates to set, as the final target torque, a value obtained by subtracting the torque reduction amount from the basic target torque.

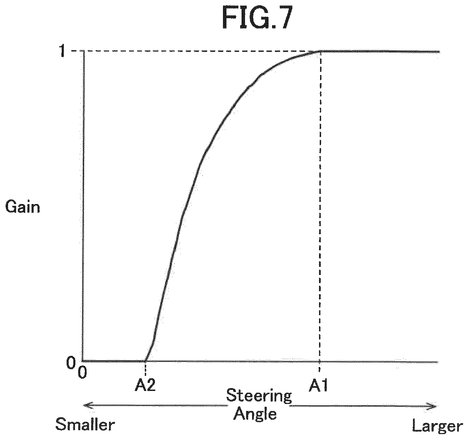

Subsequently, the controller 14 operates, in step S8, to correct the yaw moment instruction value set in the step S5. This correction of the yaw moment instruction value will be described with reference to FIG. 7.

FIG. 7 is a map defining a gain for use in correcting the yaw moment instruction value in this embodiment. This map is preliminarily created and stored in a memory or the like. In FIG. 7, the horizontal axis represents the steering angle, and the vertical axis represents the gain. This gain is set to a value of 0 to 1 (0 ≤ gain ≤ 1) according to the steering angle, and used such that it is multiplied with respect to the yaw moment instruction value calculated by the after-mentioned technique. That is, a value obtained by multiplying the yaw moment instruction value by the gain having a value of 0 to 1 is used as a corrected yaw moment instruction value.

Specifically, as shown in FIG. 7, (1) in a region where the steering angle is equal to or greater than a first given angle A1, the gain is set to 1, (2) in a region where the steering angle is in the range of a second given angle A2 (< the first given angle A1) to less than the first given angle A1, the gain is set such that it gradually decreases toward 0 as the steering angle becomes smaller, and (3) in a region where the steering angle is less than the second given angle A2, the gain is set to 0. According to this gain map, (1) in the region where the steering angle is equal to or greater than the first given angle A1, the original yaw moment instruction value is used without any correction, (2) in the region where the steering angle is in the range of the second given angle A2 to less than the first given angle A1, the yaw moment instruction value is corrected such that it gradually decreases toward 0, and (3) in the region where the steering angle is less than the second given angle A2, the yaw moment instruction value is corrected to be 0. The controller 14 operates to read out the map as shown in FIG. 7 from the memory, and acquire a value of the gain corresponding to a current value of the steering angle acquired in the step S1. Here, the correction of the yaw moment instruction value using the gain is basically performed during the turning-back manipulation of the steering wheel 6. Thus, the gain is gradually reduced from 1 to 0 along with a decrease in the steering angle caused by the turning-back manipulation.

By using the above gain map, when the steering angle is 0, the gain is set to 0, so that the yaw moment instruction value can be corrected to be 0. Thus, when the steering manipulation is switched from the turning-back manipulation to the turning manipulation, i.e., when the steering angle changes across 0, during traveling along an S-shaped curve or the like, the application of the yaw moment to the vehicle 1 by the second control is terminated. That is, it is possible to suppress a situation where, after the steering angle has changed across 0, the second control is continued and executed overlappingly with the first control which starts to be executed. This makes it possible to suppress a situation where control intervention becomes excessive as a whole in the vehicle, thereby giving the driver a feeling of strangeness.

On the other hand, as a result of the determination in the step S6, when the basic target torque is less than the given value T1 (step S6: NO) (e.g., when the driver is depressing the brake pedal, or when there is a deceleration request from the cruise control), the subroutine proceeds to step S9 in which the controller 14 operates to set, as the final target torque, the basic target torque determined in the step S3 without any correction. That is, even when the turning manipulation of the steering wheel is performed, the first control of reducing the output torque of the engine 4 is not executed, so that the first control and the second control are never overlappingly executed. Therefore, it is not necessary to perform the correction of the yaw moment instruction value like the step S8.

After completion of the step S8 or S9, the routine proceeds to step S10 in which the controller 14 operates to control the engine 4 to output the final target torque set in the step S7 or S9. Specifically, the controller 14 operates to determine, based on the final target torque set in the step S7 or S9 and an engine speed, various state quantities (e.g., air charge amount, fuel injection amount, intake air temperature, and oxygen concentration) necessary to attain the final target torque, and then control, based on the determined state quantities, actuators for driving the components of the engine 4. In this case, before performing the control, the controller 14 operates to set a limit value or range with respect to each of the state quantities, and set a control amount of each of the actuators to enable its related state value to preserve limitation by the limit value or range.

More specifically, in a case where the engine 4 is a gasoline engine, the controller 14 operates to, when the final target torque is determined by subtracting the torque reduction amount from the basic target torque in the step S7, retard an ignition timing of the spark plug 28 with respect to a point to be set when the basic target torque is determined directly as the final target torque in the step S9, thereby reducing the output torque of the engine 4.

On the other hand, in a case where the engine 4 is a diesel engine, the controller 14 operates to, when the final target torque is determined by subtracting the torque reduction amount from the basic target torque in the step S7, reduce the fuel injection amount with respect to an amount to be set when the basic target torque is determined directly as the final target torque in the step S9, thereby reducing the output torque of the engine 4.

The control to be executed by the controller 14 to reduce the output torque of the engine 4 is equivalent to the "first control".

Subsequently, in step S11, the brake control system 18 is instructed to control each of the brake units 16, based on the yaw moment instruction value set in the step S5 or the yaw moment instruction value corrected in the step S8. The brake control system 18 preliminarily stores therein a map defining a relationship between an arbitrary yaw moment instruction value and the pump speed of the hydraulic pump 20, and configured to refer to this map to operate the hydraulic pump 2 at a pump speed corresponding to the yaw moment instruction value set in the step S5 or the yaw moment instruction value corrected in the step S8 (e.g., electric power to be supplied to the hydraulic pump 20 is increased to raise the pump speed of the hydraulic pump 20 up to a value corresponding to the yaw moment instruction value).

Further, the brake control system 18 preliminarily stores therein, e.g., a map defining a relationship between an arbitrary yaw moment instruction value and the degree of opening of each of the valve units 22, and configured to refer to this map to control each of the valve units 22 individually to have a value of the degree of opening corresponding to the set or corrected yaw moment instruction value (e.g., electric power to be supplied to the solenoid value is increased to increase the degree of opening of the solenoid valve to a value corresponding to the set or corrected yaw moment instruction value), thereby adjust the braking force of each of the road wheels.

The control to be executed by the brake control system 18 is equivalent to the "second control".

After completion of the step S11, the controller 14 operates to complete one cycle of the vehicle attitude control processing routine.

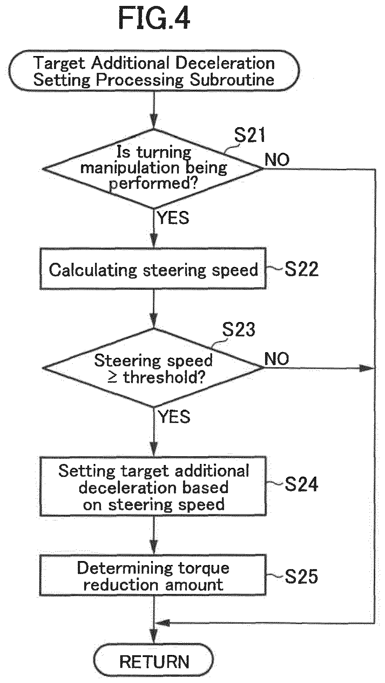

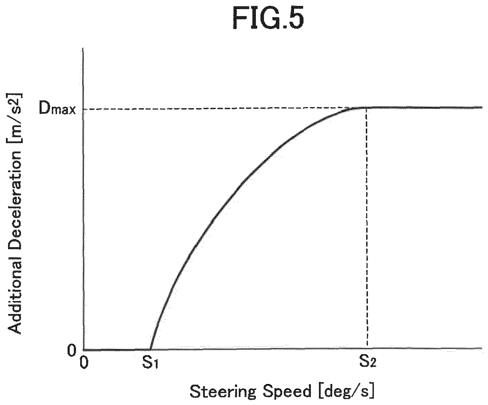

Next, with reference to FIGS. 4 and 5, the target additional deceleration setting processing subroutine in this embodiment will be described.

FIG. 4 is a flowchart of the target additional deceleration setting processing subroutine in this embodiment, and FIG. 5 is a map showing a relationship between an additional deceleration and the steering speed in this embodiment.

Upon start of the target additional deceleration setting processing subroutine, the controller 14 operates, in step S21, to determine whether or not turning manipulation of the steering wheel 6 is being performed (i.e., the steering angle (absolute value) is increasing).

As a result of this determination, when the turning manipulation is being performed (step S21: YES), the subroutine proceeds to step S22 in which the controller 14 operates to calculate the steering speed based on the steering angle acquired from the steering angle sensor 8 in the step S1 in the vehicle attitude control processing routine of FIG. 3.

Subsequently, the controller 14 operates, in step S23, to determine whether or not the calculated steering speed is equal to or greater than a given threshold S₁. As a result of this determination, when the calculated steering speed is equal to or greater than the threshold S₁ (step S23: YES), the subroutine proceeds to step S24 in which the controller 14 operates to set a target additional deceleration based on the steering speed. This target additional deceleration is a deceleration to be added to the vehicle 1 according to the steering manipulation, so as to control the vehicle behavior in conformity to the intention of the driver.

Specifically, the controller 14 operates to, based on a relationship between the additional deceleration and the steering speed illustrated in the map of FIG. 5, set, as the target additional deceleration, a value of the additional deceleration corresponding to the steering speed calculated in the step S22.

In FIG. 5, the horizontal axis represents the steering speed, and the vertical axis represents the additional deceleration. As depicted in FIG. 5, when the steering speed is less than the threshold S₁, a corresponding value of the additional deceleration is 0. That is, when the steering speed is less than the threshold S₁, the controller 14 operates to avoid executing control of adding a deceleration to the vehicle 1 based on the steering manipulation.

On the other hand, when the steering speed is equal to or greater than the threshold S₁, a value of the additional deceleration corresponding to the steering speed gradually comes closer to a given upper limit Dₘₐₓ. That is, along with an increase in the steering speed, the additional deceleration gradually increases, and an increase rate of the additional deceleration gradually decreases. This upper limit Dₘₐₓ is set to a deceleration (e.g., 0.5 m/s² ≒ 0.05 G) which is small enough so that a driver does not feel intervention of the control even when the deceleration is added to the vehicle 1 according to the steering manipulation.

Further, when the steering speed is equal to or greater than a threshold S₂ which is greater than the threshold S₁, the additional deceleration is maintained at the upper limit Dₘₐₓ.

Subsequently, the controller 14 operates to determine the torque reduction amount, based on the target additional deceleration set in the step S24. Specifically, the controller 14 operates to determine the torque reduction amount necessary to attain the target additional deceleration by means of reduction of the output torque of the engine 4, based on current values of the vehicle speed and the road grade, a currently-set one of the gear stages, etc., acquired in the step S1.

After completion of the step S25, the controller 14 operates to complete the target additional deceleration setting processing subroutine, and return to the main routine.

On the other hand, as a result of the determination in the steps S21, when the turning manipulation of the steering wheel 6 is not being performed (step S21: NO), or, as a result of the determination in the steps S23, when the calculated steering speed is less greater than the threshold S₁ (step S23: NO), the controller 14 operates to complete the target additional deceleration setting processing subroutine without setting any target additional deceleration, and return to the main routine. In this case, the torque reduction amount is 0.

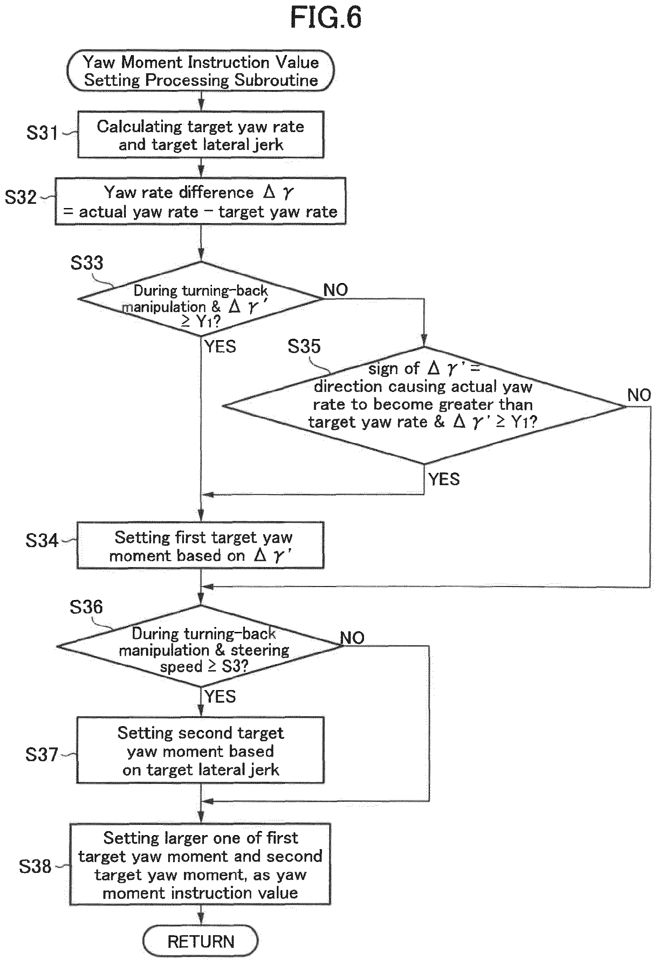

Next, with reference to FIG. 6, the yaw moment instruction value setting processing subroutine will be described.

As shown in FIG. 6, upon start of the yaw moment instruction value setting processing subroutine, the controller 14 operates, in step S31, to calculate a target yaw rate and a target lateral jerk, based on the steering angle and the vehicle speed acquired in the step S1 in the vehicle behavior control processing routine of FIG. 3.

Specifically, the controller 14 operates to calculate the target yaw rate by multiplying the steering angle by a coefficient according to the vehicle speed. Further, the controller 14 operates to calculate the target lateral jerk, based on the steering speed and the vehicle speed.

Subsequently, the controller 14 operates, in step S32, to calculate a difference (yaw rate difference) Δγ between the yaw rate (actual yaw rate) detected by the yaw rate sensor 12 and acquired in the step S1 in the vehicle behavior control processing routine of FIG. 3, and the target yaw rate calculated in the step S31.

Subsequently, the controller 14 operates, in step S33, to determine whether or not the turning-back manipulation of the steering wheel 6 is being performed (i.e., the steering angle is decreasing), and a yaw rate difference change rate Δγ' obtained by temporally differentiating the yaw rate difference Δγ is equal to or greater than a given threshold Y₁. As a result of this determination, when the turning-back manipulation is being performed and the yaw rate difference change rate Δγ' is equal to or greater than the threshold Y₁ (step S33: YES), the subroutine proceeds to step S34 in which the controller 14 operates to, based on the yaw rate difference change rate Δγ', set, as a first target yaw moment, a yaw moment whose direction is opposite to that of the actual yaw rate of the vehicle 1. Specifically, the controller 14 operates to calculate the magnitude of the first target yaw moment by multiplying the yaw rate difference change rate Δγ' by a given coefficient Cₘ₁.

On the other hand, as a result of the determination in the step S33, when the turning-back manipulation of the steering wheel 6 is not being performed (i.e., the steering angle is constant or is increasing) (step S33: NO), the subroutine proceeds to step S35 in which the controller 14 operates to determine whether or not the yaw rate difference change rate Δγ' is changing in a direction causing the actual yaw rate to become greater than the target yaw rate (i.e., in a direction causing the behavior of the vehicle 1 to exhibit an oversteer tendency), and the yaw rate difference change rate Δγ' is equal to or greater than the threshold Y₁. Specifically, when the yaw rate difference is decreasing in a situation where the target yaw rate is equal to or greater than the actual yaw rate, or when the yaw rate difference is increasing in a situation where the target yaw rate is less than the actual yaw rate, the controller 14 operates to determine that the yaw rate difference change rate Δγ' is changing in the direction causing the actual yaw rate to become greater than the target yaw rate.

As a result of this determination, when the yaw rate difference change rate Δγ' is changing in the direction causing the actual yaw rate to become greater than the target yaw rate, and the yaw rate difference change rate Δγ' is equal to or greater than the threshold Y₁ (step S35: YES), the subroutine proceeds to the step S34 in which the controller 14 operates to, based on the yaw rate difference change rate Δγ', set, as the first target yaw moment, a yaw moment whose direction is opposite to that of the actual yaw rate of the vehicle 1.

On the other hand, as a result of the determination in the step S35, when the yaw rate difference change rate Δγ' is not changing in the direction causing the actual yaw rate to become greater than the target yaw rate, or the yaw rate difference change rate Δγ' is less than the threshold Y₁ (step S35: NO), the controller 14 operates to avoid setting the first target yaw moment. In this case, the first target yaw moment is 0.

After the step S34, or, as a result of the determination in the step S35, when the yaw rate difference change rate Δγ' is not changing in the direction causing the actual yaw rate to become greater than the target yaw rate, or the yaw rate difference change rate Δγ' is less than the threshold Y₁ (step S35: NO), the subroutine proceeds to step S36 in which the controller 14 operates to determine whether or not the turning-back manipulation of the steering wheel 6 is being performed (i.e., the steering angle is decreasing), and the steering speed is equal to or greater than a given threshold S₃.

As a result of this determination, when the turning-back manipulation is being performed, and the steering speed is equal to or greater than the threshold S₃ (step S36: YES), the subroutine proceeds to step S37 in which the controller 14 operates to, based on the target lateral jerk calculated in the step S31, set, as a second target yaw moment, a yaw moment whose direction is opposite to that of the actual yaw rate of the vehicle 1. Specifically, the controller 14 operates to calculate the magnitude of the second target yaw moment by multiplying the target lateral jerk by a given positive coefficient Cₘ₂. In this process, the turning-back manipulation of the steering wheel 6 is being performed, and thereby the target lateral jerk has a value whose direction is opposite to the turning direction of the vehicle 1. Thus, the second target yaw moment obtained by multiplying this target lateral jerk by the positive coefficient Cₘ₂ is also a yaw moment whose direction is opposite to that of the actual yaw rate of the vehicle 1.

On the other hand, as a result of the determination in the step S36, when the turning-back manipulation is not being performed (i.e., the steering angle is constant or is increasing), and the steering speed is less than the threshold S₃ (step S36: NO), the controller 14 operates to avoid setting the second target yaw moment. In this case, the second target yaw moment is 0.

After the step S37, or, as a result of the determination in the step S36, when the turning-back manipulation of the steering wheel 6 is not being performed (i.e., the steering angle is constant or is increasing), or the steering speed is less than the given threshold S₃ (step S35: NO), the subroutine proceeds to step S38 in which the controller 14 operates to set, as the yaw moment instruction value, a larger one of the first target yaw moment set in the step S34 and the second target yaw moment set in the step S37.

After the step S38, the controller 14 operates to complete the yaw moment instruction value setting processing subroutine, and return to the main routine.

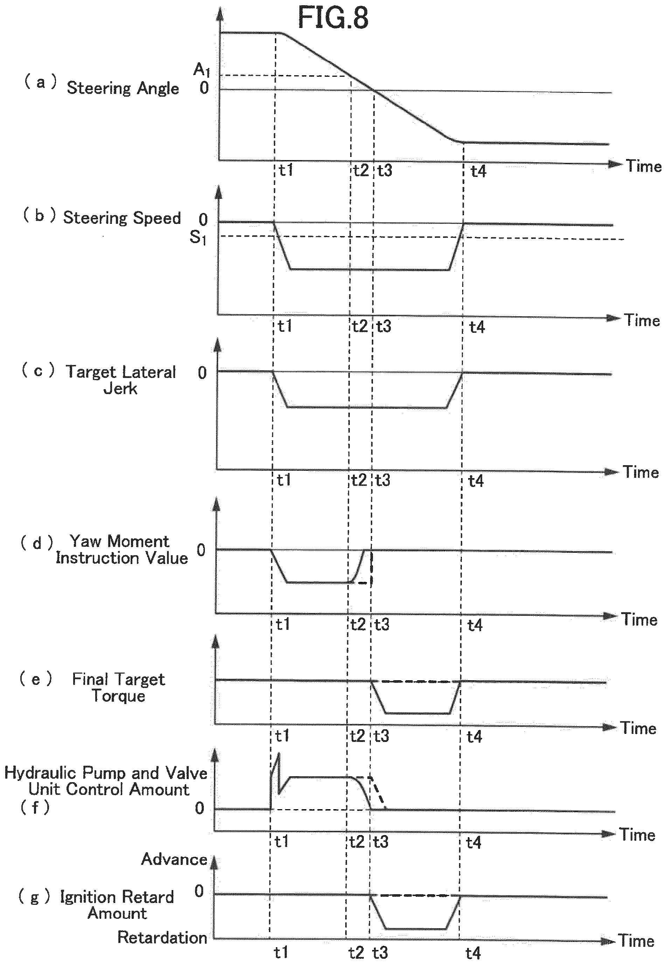

Next, with reference to FIG. 8, the operation of the vehicle control method and the vehicle system according to this embodiment will be described. FIG. 8 illustrates time charts each showing a temporal change in a respective one of various parameters regarding the vehicle behavior control, in a state in which the vehicle 1 in this embodiment is turning.

In FIG. 8, the chart (a) represents the steering angle; the chart (b) represents the steering speed; the chart (c) represents the target lateral jerk set based on the steering speed; the chart (d) represents the yaw moment instruction value set through the yaw moment instruction value setting processing subroutine; the chart (e) represents the final target torque set through the vehicle attitude control processing routine; the chart (f) represents the control amount of the hydraulic pump 20 and each of the valve units 22; and the chart (g) represents an ignition retard amount. In the charts (d) to (g), the solid line indicates a change in each parameter in the situation where the basic target torque is equal to or greater than the given value T1, and the broken line indicates a change in each parameter in the situation where the basic target torque is less than the given value T1.

In FIG. 8, as shown in the chart (a), assume a situation where the turning-back manipulation of the steering wheel 6 is started at time t1 from a state in which the steering wheel 6 is maintained at a certain steering angle, whereafter, at time t3, the steering angle decrease across 0 degree, i.e., the steering manipulation is switched to the turning manipulation, and, after time t4, the steering angle is maintained constant. Further, assume that the first target yaw moment is not set (i.e., the first target yaw moment is 0), and the second target yaw moment is set as the yaw moment instruction value.

In this case, at the time t1 when the turning-back manipulation is started, the second control of applying a yaw moment to the vehicle 1 based on the yaw moment instruction value is started (see the charts (d) and (f)).

In a typical example, in response to satisfying the condition that the steering manipulation is the turning-back manipulation, and the steering speed is equal to or greater than the threshold S₃ (the step S36 in FIG. 6: YES), the controller 14 operates to set the second target yaw moment, based on the target lateral jerk (see the chart (c)), (the step S37 in FIG. 6), and set the second target yaw moment, as the yaw moment instruction value (see the chart (d)), (the step S38 in FIG. 6). Then, in accordance with the yaw moment instruction value, the brake control system 18 is instructed to control the hydraulic pump 20 and the valve units 22 (see the chart (f)) (the step S11 in FIG. 3). In this process, as shown in the chart (f), until a given rising time period elapses after the yaw moment instruction value started to increase from 0, the brake control system 18 is instructed to control the hydraulic pump 20 and the valve units 22, in accordance with a value obtained by adding a given offset (correction value) to the yaw moment instruction value. This makes it possible to quickly raise a braking force upon start of the turning-back manipulation of the steering wheel, thereby quickly applying a desired yaw moment to the vehicle 1 to improve steering stability.

Then, assume that, when the steering angle becomes less than the first given value A1 at time t2, the basic target torque is equal to or greater than the given value T1 (the step S6 in FIG. 3: YES). In this case, the controller 14 operates to correct the yaw moment instruction value by the gain in FIG. 7 (the step 8 in FIG. 3), and the brake control system 18 is instructed to control the hydraulic pump 20 and the valve units 22, in accordance with the corrected yaw moment instruction value (second yaw moment instruction value) (see the solid lines in the charts (d) and (f)). That is, after the time t2 when the steering angle becomes less than the first given value A1, a braking force to be applied from the brake units 16 becomes smaller as the steering angle becomes smaller. Thus, before the time t3 when the steering angle becomes 0, the application of the braking force from the brake units 16 is terminated, i.e., the application of a yaw moment to the vehicle 1 by the second control is terminated. Thus, in this embodiment, in a situation where the steering angle decreases across 0, i.e., the steering manipulation is switched from the turning-back manipulation to the turning manipulation, and the first control of reducing the output torque of the engine 4 by means of retardation of the ignition timing (see the solid lines in the charts (e) and (g)), the second control has already been terminated, so that it is possible to suppress a situation where the first control and the second control are overlappingly executed.

On the other hand, assume that, when the steering angle becomes less than the first given value A1 at time t2, the basic target torque is less than the given value T1 (the step S6 in FIG. 3: NO). In this case, the controller 14 operates to avoid correcting the yaw moment instruction value by the gain, and the brake control system 18 is instructed to control the hydraulic pump 20 and the valve units 22, in accordance with the non-corrected yaw moment instruction value (first yaw moment instruction value) (see the broken lines in the charts (d) and (f)). That is, even after the time t2 when the steering angle becomes less than the first given value A1, a braking force to be applied from the brake units 16 is maintained, and, from the time t3 when the steering angle decreases across 0, i.e., the steering manipulation is switched from the turning-back manipulation to the turning manipulation, the braking force is reduced. Thus, after the time t3, the application of a yaw moment to the vehicle 1 by the second control is continued for a while. However, when the basic target torque is less than the given value T1 (the step S6 in FIG. 3: NO), the first control of reducing the output torque of the engine 4 by means of retardation of the ignition timing is not executed even when the steering manipulation is switched from the turning-back manipulation to the turning manipulation (see the broken lines in the charts (e) and (g)), so that, although the application of the yaw moment to the vehicle 1 by the second control is continued, the first control and the second control are never overlappingly executed.

Subsequently, when the steering speed becomes less than the threshold S₁ (the step S23 in FIG. 4), the first control is terminated.

### < Functions/Advantageous Effects >

Next, the effects/advantageous effects of the vehicle control method and the vehicle system according to this embodiment will be described.

In this embodiment, under the condition that the output torque of the engine 4 is equal to or greater than the given value T1, when the steering angle becomes less than the given value A1 during turning-back manipulation, a yaw moment is applied to the vehicle 1 based on the yaw moment instruction value corrected by a gain of less than 1, and then, during the turning manipulation of the steering wheel, the output torque of the engine 4 is reduced. Thus, in the situation where the steering manipulation is switched from the turning-back manipulation to the turning manipulation, and the first control of reducing the output torque of the engine 4 is executed, the second control of applying a yaw moment to the vehicle 1 is suppressed, so that it is possible to suppress a situation where the first control and the second control are overlappingly executed and thereby control intervention becomes excessive as a whole in the vehicle.

On the other hand, under the condition that the output torque of the engine 4 is less than the given value T1, during the turning-back manipulation, a yaw moment is applied to the vehicle 1 based on the yaw moment instruction value which is not corrected by a gain of less than 1, and then, during the turning manipulation, the first control of reducing the output torque of the engine 4 is not executed. Thus, in the situation where the first control of reducing the output torque of the engine 4 is not executed after the steering manipulation is switched from the turning-back manipulation to the turning manipulation, the second control of applying a yaw moment to the vehicle 1 is not suppressed, so that it is possible to much more improve steering stability during the turning-back manipulation. Further, the second control is not suppressed until the steering manipulation is switched to the turning manipulation, so that the application of a yaw moment to the vehicle 1 is at least temporarily continued after the steering angle decreases across the neutral point, thereby making it is possible to ensure improvement in turning performance of the vehicle 1 even in the situation where the first control of reducing the output torque of the engine 4 is not executed.

As above, in this embodiment, in vehicle attitude control of executing, based on the steering manipulation, control of applying a deceleration to the vehicle 1 and control of applying a yaw moment to the vehicle 1, it is possible to satisfy both of suppression of the situation where control intervention becomes excessive as a whole in the vehicle, and improvement in steering stability during the turning-back manipulation.

### < Modification >

Next, one modification of the above embodiment will be described. In the following, descriptions about the same component and processing as those in the above embodiment will be appropriately omitted. That is, any component and processing which will not be described in the following are the same as those in the above embodiment.

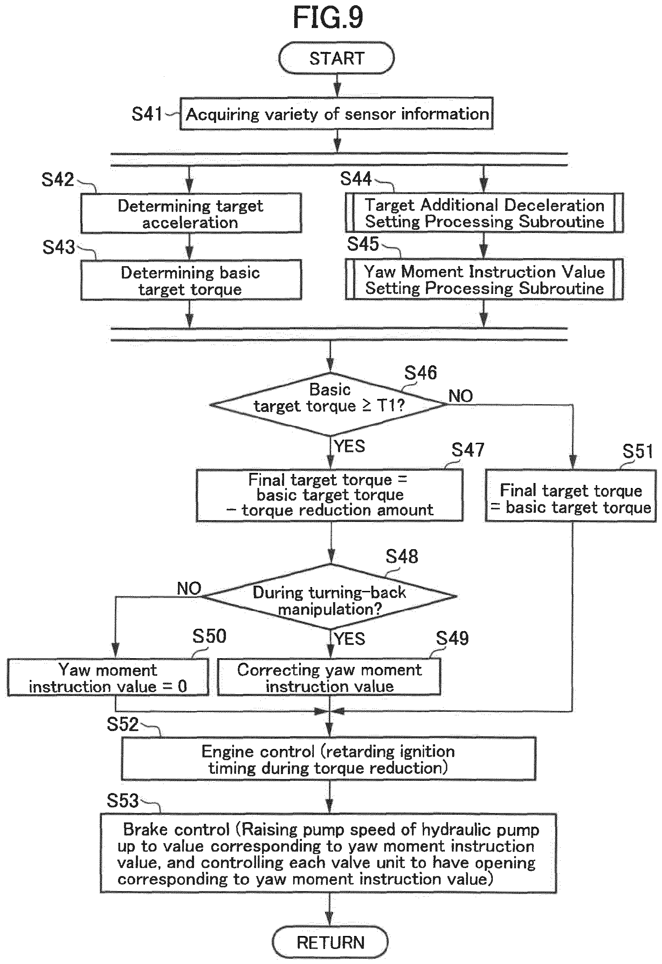

First, with reference to FIG. 9, a vehicle attitude control processing routine in a vehicle control device according to one modification of the above embodiment (modified embodiment) will be described. FIG. 9 is a flowchart of the vehicle attitude control processing routine in this modified embodiment.

After determining the basic target torque of the engine 4 in step S43, and setting the yaw moment instruction value through the yaw moment instruction value setting processing subroutine in step S45, the controller 14 operates, in step S46, to determine whether or not the basic target torque determined in the step S43 is equal to or greater than the given value T1.

As a result of the determination in the step S46, when the basic target torque is equal to or greater than the given value T1 (step S46: YES) (e.g., when the driver is depressing the accelerator pedal, or when there is an acceleration request from the cruise control), the subroutine proceeds to step S47 in which the controller 14 operates to determine the final target torque, based on the basic target torque determined in the step S43 and the torque reduction amount (see FIG. 4) determined in step S44. Specifically, the controller 14 operates to set, as the final target torque, a value obtained by subtracting the torque reduction amount from the basic target torque.

Subsequently, the controller 14 operates, in step S48, to determine whether or not the turning-back manipulation of the steering wheel 6 is being performed (i.e., the steering angle is decreasing). As a result of this determination, when the turning-back manipulation is being performed (step S48: YES), the routine proceeds to step S49 in which the controller 14 operates to refer to the map illustrated in FIG. 7 to correct the yaw moment instruction value set in the step S45.

On the other hand, as a result of the determination in the step S48, when the turning-back manipulation is not being performed (step S48: NO), i.e., when the turning manipulation of the steering wheel 6 is being performed, or a steered position of the steering wheel 6 is held, the routine proceeds to step S50 in which the controller 14 operates to set the yaw moment instruction value to 0.

Further, as a result of the determination in the step S46, when the basic target torque is less than the given value T1 (step S46: NO) (e.g., when the driver is depressing the brake pedal, or when there is a deceleration request from the cruise control), the routine proceeds to step S51 in which the controller 14 operates to set, as the final target torque, the basic target torque determined in the step S43 without any correction.

After completion of the step S49, S50 or S51, the routine proceeds to step S52 in which the controller 14 operates to control the engine 4 to output the final target torque set in the step S47 or S51.

Subsequently, in step S53, the brake control system 18 is instructed to control each of the brake units 16, based on the yaw moment instruction value set in the step S45 or the yaw moment instruction value corrected in the step S49. When the yaw moment instruction value is set to 0 in the step S50, the second control of applying a yaw moment to the vehicle 1 is not executed.

After completion of the step S53, the controller 14 operates to complete one cycle of the vehicle attitude control processing routine.

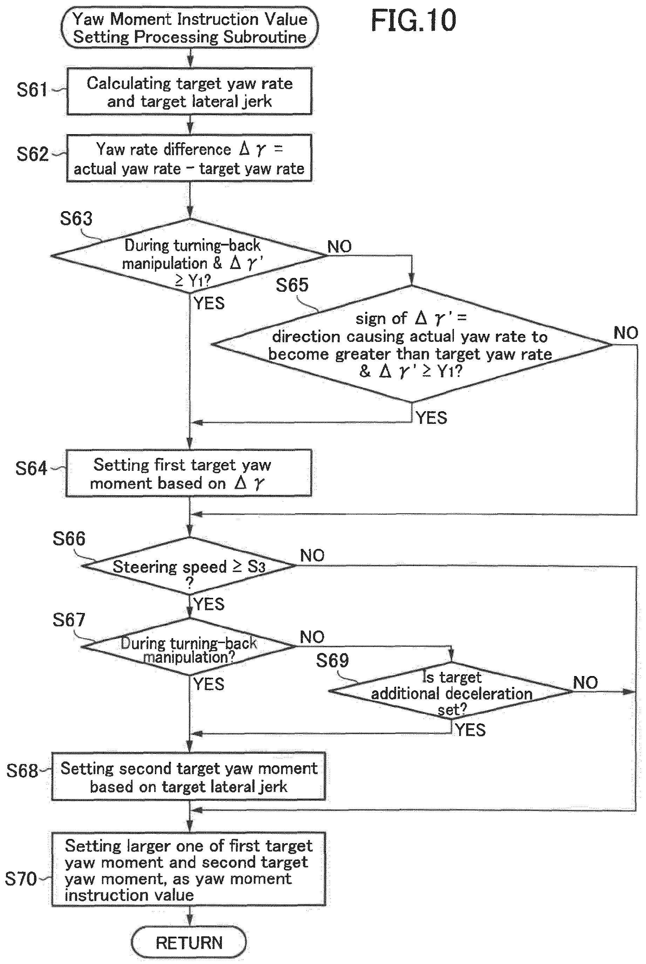

Next, with reference to FIG. 10, the yaw moment instruction value setting processing subroutine in this modified embodiment will be described. FIG. 10 is a flowchart of the yaw moment instruction value setting processing subroutine in the modified embodiment.

After step S64 of setting, as a first target yaw moment, a yaw moment whose direction is opposite to an actual yaw rate of the vehicle 1, based on the yaw rate difference change rate Δγ', or, as a result of determination in step S65, when the yaw rate difference change rate Δγ' is not changing in a direction causing the actual yaw rate to become greater than the target yaw rate, or the yaw rate difference change rate Δγ' is less than the threshold Y₁ (step S65: NO), the subroutine proceeds to step S66 in which the controller 14 operates to determine whether or not the steering speed is equal to or greater than the given threshold S₃.

As a result of this determination, when the steering speed is equal to or greater than the threshold S₃ (step S66: YES), the subroutine proceeds to step S67 in which the controller 14 operates to determine whether or not the turning-back manipulation of the steering wheel 6 is being performed (i.e., the steering angle is decreasing). As a result of this determination, when the turning-back manipulation of the steering wheel 6 is being performed (step S67: YES), the subroutine proceeds to step S68 in which the controller 14 operates to, based on the target lateral jerk calculated in step S61, set, as a second target yaw moment, a yaw moment whose direction is opposite to that of the actual yaw rate of the vehicle 1. Specifically, the controller 14 operates to calculate the magnitude of the second target yaw moment by multiplying the target lateral jerk by the given positive coefficient Cₘ₂.

On the other hand, as a result of the determination in the step S67, when the turning-back manipulation of the steering wheel 6 is not being performed (step S67: NO), i.e., when the turning manipulation of the steering wheel 6 is being performed, or a steered position of the steering wheel 6 is held, the subroutine proceeds to step S69 in which the controller 14 operates to determine whether or not the target additional deceleration is set through the target additional deceleration setting processing subroutine in FIG. 4.

As a result of this determination, when the target additional deceleration is set (step S69: YES), i.e., when the target additional deceleration is set based on the steering speed under the condition that the turning manipulation of the steering wheel 6 is being performed, and the steering speed is equal to or greater than the threshold S₁, the subroutine proceeds to the step S68 in which the controller 14 operates to, based on the target lateral jerk calculated in step S61, set the second target yaw moment. Specifically, the controller 14 operates to calculate the magnitude of the second target yaw moment by multiplying the target lateral jerk by the given positive coefficient Cₘ₂. In this process, the turning manipulation of the steering wheel 6 is being performed, and thereby the target lateral jerk has a value whose direction is the same as the turning direction of the vehicle 1. Thus, the second target yaw moment obtained by multiplying this target lateral jerk by the positive coefficient Cₘ₂ is also a yaw moment whose direction is the same as that of the actual yaw rate of the vehicle 1 which increases according to an increase in the steering angle.

On the other hand, as a result of the determination in the step S66, when the steering speed is less than the threshold S₃ (step S66: NO), or, as a result of the determination in the step S69, when the target additional deceleration is not set through the target additional deceleration setting processing subroutine in FIG. 4 (step S69: NO), the controller 14 operates to avoid setting the second target yaw moment. In this case, the second target yaw moment is 0.

After the step S68, or, as a result of the determination in the step S66, when the steering speed is less than the given threshold S₃ (step S66: NO), or the target additional deceleration is not set through the target additional deceleration setting processing subroutine in FIG. 4 (step S69: NO), the subroutine proceeds to step S70 in which the controller 14 operates to set, as the yaw moment instruction value, a larger one of the first target yaw moment set in the step S64 and the second target yaw moment set in the step S68.

After the step S70, the controller 14 operates to complete the yaw moment instruction value setting processing subroutine, and return to the main routine.

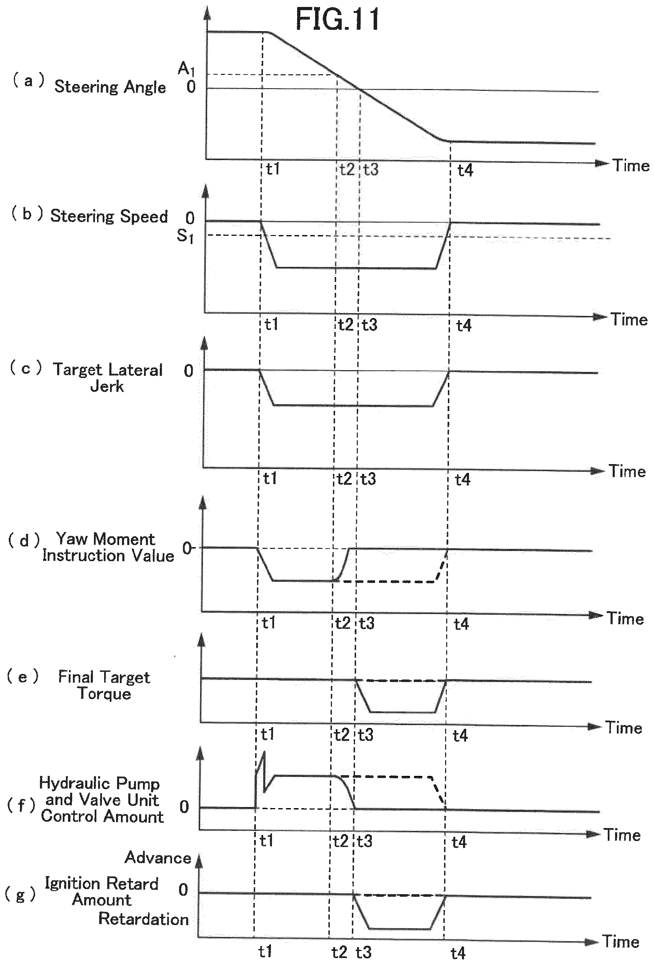

Next, with reference to FIG.11, the operation of the vehicle control method and the vehicle system according to this modified embodiment will be described. FIG. 11 illustrates time charts each showing a temporal change in a respective one of various parameters regarding the vehicle behavior control, in a state in which the vehicle 1 in this modified embodiment is turning. FIG. 11 is identical to FIG. 8 in terms of the charts (a) to (c), (e) and (g), and is different from FIG. 8 in terms of the broken lines in the charts (d) and (f).

Specifically, in this modified embodiment, assume that, when the steering angle becomes less than the first given value A1 at the time t2, the basic target torque is less than the given value T1 (the step S6 in FIG. 3: NO). In this case, the controller 14 operates to avoid correcting the yaw moment instruction value by the gain, and the brake control system 18 is instructed to control the hydraulic pump 20 and the valve units 22, in accordance with the non-corrected yaw moment instruction value (first yaw moment instruction value) (see the broken lines in the charts (d) and (f)). That is, even after the time t2 when the steering angle becomes less than the first given value A1, a braking force to be applied from the brake units 16 is maintained. Further, even after the time t3 when the steering angle decreases across 0, i.e., the steering manipulation is switched from the turning-back manipulation to the turning manipulation, when the target additional deceleration is set based on the steering speed under the condition that the turning manipulation of the steering wheel 6 is being performed, and the steering speed is equal to or greater than the threshold S₁ (the step S69 in FIG. 10: YES), a yaw moment instruction value (third yaw moment instruction value) whose direction is the same as that of an actual yaw rate of the vehicle 1 which increases along with an increase in the steering angle is set based on the target lateral jerk (the steps S68 and S70 in FIG. 10). Thus, after the time t3, the application of a yaw moment to the vehicle 1 by the second control is continued. Here, when the steering manipulation is switched from the turning-back manipulation to the turning manipulation, one or more of the brake unit 16 to be used to generate a braking force based on the yaw moment instruction value may be changed. For example, a braking force may be generated during the turning-back manipulation, using the two brake units 16 of the front road wheel 2 and the rear road wheel each on the outer side in a turning direction, and generated during the turning manipulation, using the brake unit 16 of the front road wheel 2 on the inner side in the turning direction.

In this situation, the basic target torque is less than the given value T1 (step S46 in FIG. 9: NO). Thus, the first control of reducing the output torque of the engine 4 by means of retardation of the ignition timing is not executed even when the steering manipulation is switched from the turning-back manipulation to the turning manipulation (see the broken lines in the charts (e) and (g)), and the effect of improving motion performance of the vehicle 1 by the first control is not obtained. However, as mentioned above, after the time t3 when the steering manipulation is switched from the turning-back manipulation to the turning manipulation, the second yaw moment whose direction is the same as that of an actual yaw rate of the vehicle 1 which increases along with an increase in the steering angle is set as a yaw moment instruction value (third yaw moment instruction value), so that the effect of improving motion performance of the vehicle 1 can be attained by the second control, instead of the first control.

Subsequently, when the steering speed becomes less than the threshold S₁, and thereby the setting of the target additional deceleration is terminated, the setting of the second target yaw moment is terminated (the step S69 in FIG. 10: NO), and thereby the second control is terminated.

In the above modified embodiment, under the condition that the output torque of the engine 4 is less than the given value T1, during the turning-back manipulation, a yaw moment is applied to the vehicle 1 based on the yaw moment instruction value which is not corrected by a gain of less than 1, and then, during the turning manipulation, a yaw moment whose direction is the same as that of an actual yaw rate of the vehicle 1 which increases along with an increase in the steering angle is applied, without reducing the output torque of the engine 4. Thus, in the situation where the first control of reducing the output torque of the engine 4 is not executed after the steering manipulation is switched from the turning-back manipulation to the turning manipulation, the second control of applying a yaw moment to the vehicle 1 is not suppressed, so that it is possible to much more improve steering stability during the turning-back manipulation, and ensure the improvement in motion performance of the vehicle 1 by the second control during the turning manipulation.

### (Other Modifications)

The above embodiment and modified embodiment have been described based on an example where the vehicle attitude control is executed using the steering angle of the vehicle 1. Alternatively, instead of the steering angle, the vehicle attitude control may be executed based on the yaw rate or a lateral acceleration. The above embodiment has been described based on an example where the vehicle attitude control is executed using the steering speed of the vehicle 1. Alternatively, instead of the steering speed, the vehicle attitude control may be executed based on a yaw acceleration or a lateral jerk.

### LIST OF REFERENCE SIGNS

- 1:: vehicle
- 2:: front road wheel
- 4:: engine
- 6:: steering wheel
- 8:: steering angle sensor
- 9:: accelerator position sensor
- 10:: brake depression amount sensor
- 11:: vehicle speed sensor
- 12:: yaw rate sensor
- 13:: acceleration sensor
- 14:: controller
- 16:: brake unit
- 18:: brake control system
- 20:: hydraulic pump
- 22:: valve unit
- 24:: hydraulic pressure sensor
- 28:: spark plug

## Claims

1. A vehicle control method for a vehicle equipped with road wheels, an engine to generate a torque for driving the road wheels, and a braking device to apply a braking force to the road wheels, the vehicle control method comprising the steps of:
reducing an output torque of the engine in accordance with an increase in steering angle of the vehicle, when the output torque of the engine is equal to or greater than a given value;
setting, in accordance with a decrease in the steering angle of the vehicle, a first yaw moment instruction value whose direction is reverse to that of a yaw rate being generated in the vehicle;
applying a braking force to the road wheels based on the first yaw moment instruction value, when the output torque of the engine is less than the given value; and
applying a braking force to the road wheels based on a second yaw moment instruction value smaller than the first yaw moment instruction value.

2. The vehicle control method according to claim 1, wherein the step of applying the braking force to the road wheels based on the second yaw moment instruction value comprises gradually reducing the braking force along with a decrease in the steering angle of the vehicle.

3. The vehicle control method according to claim 2, wherein the step of applying the braking force to the road wheels based on the second yaw moment instruction value comprises setting the braking force to approximately 0, when the steering angle of the vehicle is at a neutral point thereof.

4. The vehicle control method according to any one of claims 1 to 3, wherein the step of applying the braking force to the road wheels based on the first yaw moment instruction value comprises continuing an application of the braking force to the road wheels, when the steering angle of the vehicle changes beyond a neutral point thereof.

5. The vehicle control method according to any one of claims 1 to 4, which further comprises the steps of:
setting, in accordance with an increase in the steering angle, a third yaw moment instruction value whose direction is the same as that of a yaw rate of the vehicle increasing according to the increase in the steering angle; and
applying a braking force to the road wheels based on the third yaw moment instruction value, when the output torque of the engine is less than the given value.

6. A vehicle control method for a vehicle equipped with road wheels, an engine to generate a torque for driving the road wheels, and a braking device to apply a braking force to the road wheels, the vehicle control method comprising the steps of:
reducing an output torque of the engine in accordance with an increase in steering angle of the vehicle, when the output torque of the engine is equal to or greater than a given value;
setting, in accordance with a decrease in the steering angle of the vehicle, a yaw moment instruction value whose direction is reverse to that of a yaw rate being generated in the vehicle; and
applying a braking force to the road wheels based on the yaw moment instruction value,
wherein, when the output torque of the engine is less than the given value, the step of setting the yaw moment instruction value comprises making the yaw moment instruction value larger than when the output torque of the engine is equal to or greater than the given value.

7. A vehicle system for controlling a vehicle, comprising: road wheels; an engine to generate a torque for driving the road wheels; a braking device to apply a braking force to the road wheels; a steering angle sensor to detect a steering angle of the vehicle; an operating state sensor to detect an operating state of the engine; and a control device, wherein the control device is configured to:
reduce an output torque of the engine in accordance with an increase in the steering angle detected by the steering angle sensor, when it is determined that the output torque of the engine is equal to or greater than a given value based on the operating state detected by the operating state sensor;
set, in accordance with a decrease in the steering angle detected by the steering angle sensor, a first yaw moment instruction value whose direction is reverse to that of a yaw rate being generated in the vehicle;
apply a braking force from the braking device to the road wheels based on the first yaw moment instruction value, when it is determined that the output torque of the engine is less than the given value based on the operating state detected by the operating state sensor; and
apply a braking force from the braking device to the road wheels based on a second yaw moment instruction value smaller than the first yaw moment instruction value, when it is determined that the output torque of the engine is equal to or greater than the given value based on the operating state detected by the operating state sensor.

8. A vehicle system for controlling a vehicle, comprising: road wheels; an engine to generate a torque for driving the road wheels; a braking device to apply a braking force to the road wheels; a steering angle sensor to detect a steering angle of the vehicle; an operating state sensor to detect an operating state of the engine; and a control device, wherein the control device is configured to:
reduce the output torque of the engine in accordance with an increase in the steering angle detected by the steering angle sensor, when it is determined that an output torque of the engine is equal to or greater than a given value based on the operating state detected by the operating state sensor;
set, in accordance with a decrease in the steering angle detected by the steering angle sensor, a yaw moment instruction value whose direction is reverse to that of a yaw rate being generated in the vehicle; and
apply a braking force from the braking device to the road wheels based on the yaw moment instruction value,
wherein, when it is determined that the output torque of the engine is less than the given value, the control device is configured to make the yaw moment instruction value larger than when it is determined that the output torque of the engine is equal to or greater than the given value.
